# EUROPÄISCHE PATENTSCHRIFT

(11) **EP 2 066 011 B1**
(45) Veröffentlichungstag und Bekanntmachung des Hinweises auf die Patenterteilung: **17.02.2010**
(21) Anmeldenummer: 08169869.8
(22) Anmeldetag: 25.11.2008
(51) Int. Cl.: H02M 3/158

(54) **Verfahren zur Steuerung eines Gleichstromstellers**
Method for controlling a direct current power converter
Procédé pour la commande d'un convertisseur de courant continu

(30) Priorität: 28.11.2007 DE 102007057230
(43) Veröffentlichungstag der Anmeldung: 03.06.2009
(73) Patentinhaber: Kostal Industrie Elektrik GmbH, 58513 Lüdenscheid (DE)
(72) Erfinder: Landwehr, Frank, 44227 Dortmund (DE)
(74) Vertreter: Kerkmann, Detlef

(56) Entgegenhaltungen:
- US-A1- 2004 151 010
- US-B1- 6 215 288

## Beschreibung

Die Erfindung betrifft ein Verfahren zur Steuerung eines Gleichstromstellers, der zumindest einen durch einen Mikrocontroller steuerbaren Halbleiterschalter und eine Speicherdrossel aufweist.

In der nicht vorveröffentlichten deutschen Patentanmeldung DE 10 2007 041 510 ist ein Gleichstromsteller beschrieben, der als Hochsetz- oder Tiefsetzsteller betrieben werden kann und der mehrere Stromkanäle aufweist, die jeweils aus mindestens einer Speicherdrossel und einem steuerbaren Halbleiterschalter bestehen. Zur Steuerung der Halbleiterschalter ist vorzugsweise ein Mikrocontroller vorgesehen. Der Gleichstromsteller wird an der Lückgrenze betrieben ("Transition-Mode"), da hierbei im Volllastbetrieb die Schaltverluste des Gleichstromstellers minimal sind.

Dieser vorbekannte Transition-Mode-Steller sensiert in einem Stromkanal das Absinken des Drosselstroms auf den Wert Null, um daraufhin die Stromkanäle zueinander phasenversetzt erneut einzuschalten. Bei jedem Zyklus werden die Speicherdrosseln des Gleichstromstellers voll aufmagnetisiert. Bei kleinen Strömen kann die Schaltfrequenz der Halbleiterschalter recht groß werden. Dadurch steigen die Verluste durch Ummagnetisierung in den Speicherdrosseln bzw. die Schaltverluste der Halbleiterschalter stark an, wodurch sich der Wirkungsgrad im Teillastbereich verschlechtert.

Die US 6,215,288 B1 offenbart ein Verfahren zur Steuerung eines Gleichstromstellers, der zumindest einen durch einen Mikrocontroller steuerbaren Halbleiterschalter und eine Speicherdrossel aufweist, wobei vorgegebene Größen, insbesondere die Schaltfrequenz, mit einem von einem Parameter (Peakwert des Drosselstroms, "peak inductor current") abhängigen Wert anhand einer Steuerungskurve ("control law curve") initialisiert werden und folgende Verfahrensschritte zyklisch aufeinander folgen:
- Bestimmung einer Drosselstromgröße ("peak inductor current"), die aus dem Peakwert des Drosselstroms der Speicherdrossel (L) abgeleitet ist,
- Berechnung einer Schaltfrequenz zur Taktung des steuerbaren Halbleiterschalters, wobei die Schaltfrequenz eine Funktion der Drosselstromgröße ist. Diese Funktion ("control law curve") stellt auch sicher, dass die Drosselstromgröße, eine vorgegebene Stromschwelle ("maximum current limit") nicht überschreitet, und
- Begrenzung der berechneten Schaltfrequenz auf einen Wert zwischen einer unteren Schaltfrequenz und einer oberen Schaltfrequenz.

Der Gegenstand der US 6,215,288 B1 verwirklicht damit die im Oberbegriff unseres Hauptanspruchs 1 aufgeführten Merkmale.

Die US 2004/0151010 A1 offenbart ein Verfahren zur Steuerung eines Gleichstromstellers mit Halbleiterschalter, Speicherdrossel, Drosselstromgröße, Berechnung einer Schaltfrequenz als Funktion der Drosselstromgröße, sowie eine Begrenzung der Schaltfrequenz auf einen Wert zwischen einer oberen und einer unteren Schaltfrequenz. Der Wirkungsgrad wird dabei durch die Aktivierung bzw. Deaktivierung von parallel geschalteten Stromkanälen in Abhängigkeit von der Drosselstromgröße verbessert.

Es stellte sich die Aufgabe, ein Verfahren zum Betrieb eines Gleichstromstellers zu schaffen, bei dem der Wirkungsgrad im Teillastbereich über die aus dem Stand der Technik bekannten Grenzen hinaus verbessert wird.

Diese Aufgabe wird dadurch gelöst, dass wenn im diskontinuierlichen Betrieb die Drosselstromgröße die Stromschwelle überschreitet, die Schaltfrequenz auf dem Wert der oberen Schaltfrequenz gehalten wird.

Im Teillastbereich wird die Schaltfrequenz zum Takten des oder der Halbleiterschalter berechnet und auf einen Wert zwischen einem Minimalwert und einem Maximalwert begrenzt. Hierbei kommt es im Teillastbereich zum diskontinuierlichen ("lückenden") Betrieb. Erst bei höheren Lasten geht der Gleichstromsteller vom diskontinuerlichen Betrieb in den Transition-Mode über.

Bei noch höheren Lasten kann, je nach Ausführung des Gleichstromstellers, entweder der Transition-Mode beibehalten werden, wobei sich die Schaltfrequenz systembedingt verringert oder der Gleichstromsteller geht in die kontinuierliche Betriebsart über.

Bei Gleichstromstellern, die mehrere Stromkanäle aufweisen, welche nacheinander in Abhängigkeit von dem in einem ersten Stromkanal erfassten Stromverlauf getaktet betrieben werden (sogenannte Master- und Slavekanäle), kann darüber hinaus eine lastabhängige Aktivierung und Deaktivierung von Slavekanälen vorgesehen werden. Durch die Deaktivierung von Slavekanälen erhöht sich der Strom im Masterkanal und gegebenenfalls in den anderen Slavekanälen, was dort höhere Ummagnetisierungs- und Leitungsverluste zur Folge hat. Es verringern sich jedoch die Schaltverluste der bzw. des Halbleiterschalter(s), so dass insgesamt eine Wirkungsgraderhöhung erzielt werden kann.

Ein Ausführungsbeispiel der Erfindung wird im folgenden anhand der Zeichnung näher erläutert. Es zeigen
- Figur 1: einen Ablaufplan des erfindungsgemäßen Verfahrens,

- Figur 2: die Grundschaltung eines bidirektionalen Gleichstromstellers nach dem Stand der Technik,
- Figur 3: die Grundschaltung eines mehrkanaligen bidirektionalen Gleichstromstellers,
- Figur 4: mehrere Verlaufsdiagramme des Drosselstroms.

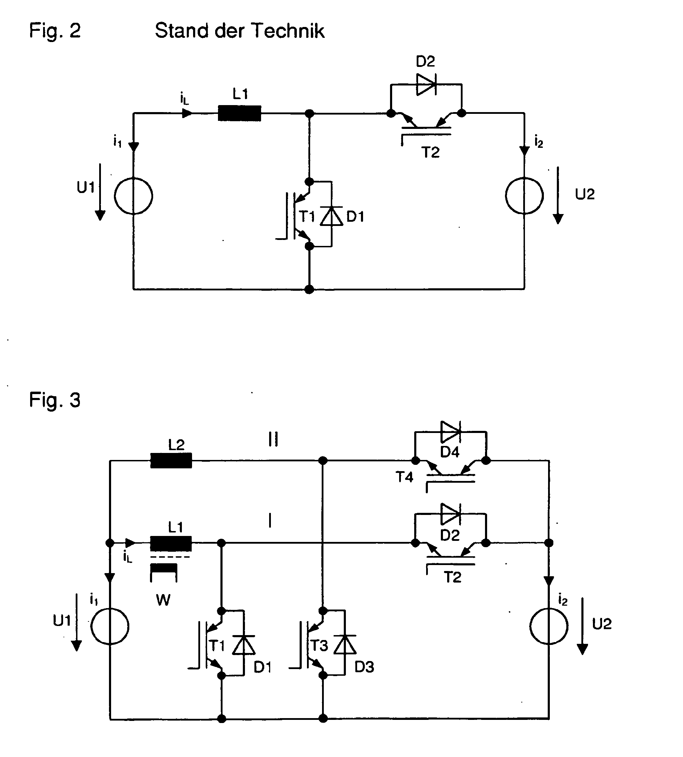

Die Figur 2 zeigt die schematisch dargestellte Grundschaltung eines Gleichstromstellers, an der dessen grundsätzliche Funktionsweise erläutert werden soll. Der Gleichstromsteller ist hier rein beispielhaft als ein bidirektionaler Gleichstromsteller ausgeführt. Er besteht im wesentlichen aus einer ersten und einer zweiten Spannungsquelle (U1, U2), einer Speicherdrossel L1, sowie aus zwei Halbleiterschaltern (T1, T2), die bevorzugt als IGBT (Insulated Gate Bipolar Transistor) ausgebildet sein können. Parallel zu den Lastanschlüssen der Halbleiterschalter (T1, T2) ist jeweils eine Freilaufdiode (D1, D2) geschaltet.

Die Halbleiterschalter (T1, T2) sind derart mit den anderen Bauelementen verschaltet, dass bei einem durchgeschalteten ersten Halbleiterschalter T1 die Anschlüsse der Speicherdrossel L1 über den ersten Halbleiterschalter T1 mit der ersten Spannungsquelle U1 verbunden sind, und bei einem durchgeschaltetem zweiten Halbleiterschalter T2 die Speicherdrossel L1 mit dem zweiten Halbleiterschalter T2 und den beiden Spannungsquellen (U1, U2) zugleich in Reihe geschaltet ist.

Das Funktionsprinzip eines derartigen Gleichstromstellers besteht darin, dass durch Einschalten eines der Halbleiterschalter (T1 bzw. T2) die Speicherdrossel L1 bestromt wird, die daraufhin ein Magnetfeld aufbaut. Die in diesem Magnetfeld gespeicherte Energie bewirkt nach dem Ausschalten des einen Halbleiterschalters (T1 bzw. T2) einen Induktionsstrom (i₂ bzw. i₁), der über die zum jeweils anderen Halbleiterschalter (T2 bzw. T1) gehörende Freilaufdiode (D2 bzw. D1) und eine der Spannungsquellen (U2, U1) fließt.

Zum kontinuierlichen Betrieb ist eine Taktung eines der Halbleiterschalter (T1 bzw. T2) erforderlich, beispielsweise durch eine Pulsweitenmodulation, die durch eine zentrale Steuerungseinrichtung und besonders vorteilhaft durch einen Mikrocontroller realisiert sein kann. Daher ist, ohne Beschränkung der Allgemeinheit, die Steuerungseinrichtung hier als Mikrocontroller bezeichnet, wobei aus Gründen der Vereinfachung in den Figuren auf eine Darstellung des Mikrocontrollers verzichtet wurde.

Grundsätzlich gibt es zwei Betriebsarten des Gleichstromstellers, und zwar den Hochsetzstellerbetrieb und den Tiefsetzstellerbetrieb, je nach dem welcher der beiden Halbleiterschalter (T1, T2) getaktet wird. Für jede Betriebsart sind noch mehrere Betriebszustände zu unterscheiden, und zwar der lückende Betrieb, der auch als diskontinuierlicher Betrieb bezeichnet wird, der Betrieb an der Lückgrenze, auch kurz Transition-Mode genannt, sowie der kontinuierliche Betrieb. Diese Betriebsarten und Betriebszustände sind in der nicht vorveröffentlichten DE 10 2007 041 510 ausführlich erläutert worden.

Zur Erzielung eines guten Wirkungsgrades wird zumeist ein Betrieb an der Lückgrenze bevorzugt, da hierbei die Halbleiterchalter T1 bzw. T2 stromlos eingeschaltet werden und somit keine Einschaltverluste entstehen.

Nachteilig am Betrieb an der Lückgrenze ist allerdings die große Welligkeit des Stroms i_{L} durch die Speicherdrossel L1 und damit auch des Ausgangsstroms (i₁ bzw. i₂). Um diese Welligkeit zu verringern, kann ein Gleichstromsteller mehrere parallele Stromkanäle (I, II) aufweisen. Einen derartigen Gleichstromsteller mit zwei Stromkanälen zeigt schematisch die Figur 3. Zur Ausbildung des Gleichstromstellers können selbstverständlich auch mehr als zwei parallele Stromkanäle (I, II) vorgesehen sein, was trotz des größeren Bauteileaufwands vorteilhaft sein kann, da sich mit jedem weiteren Stromkanal die Welligkeit des Speicherdrosselstromes i_{L} verringert.

Den ersten Stromkanal I bilden die Speicherdrossel L1, die Halbleiterschalter T1 und T2 und die Dioden D1 und D2; den zweiten Stromkanal II entsprechend die Speicherdrossel L2, die Halbleiterschalter T3 und T4, sowie die Dioden D3 und D4.

Beide Stromkanäle (I, II) werden mit der gleichen Taktrate, aber jeweils mit einem zeitlichen Versatz getaktet. Der zur Taktung der Halbleiterschalter (T1, T3 bzw. T2, T4) vorgesehene Mikrocontroller kann dabei vorteilhafterweise die jeweils zu taktenden Halbleiterschalter (T1, T3 bzw. T2, T4) sämtlicher Stromkanäle (I, II) steuern.

Die Speicherdrossel L1 des ersten Stromkanals I weist eine zusätzliche Wicklung W zur Stromnulldurchgangserkennung auf. Da die Stromnulldurchgänge dieses Stromkanals I die Taktung sämtlicher Stromkanäle bestimmt, wird der erste Stromkanal I nachfolgend auch als "Masterkanal" bezeichnet. Die Speicherdrossel L2 im zweiten, zum ersten Stromkanal I parallel geschalteten Stromkanal II, weist dagegen keine Instanz zur Erkennung eines Stromnulldurchgangs auf. Der Stromkanal II wird in Abhängigkeit von dem im ersten Stromkanal I erfassten Stromnulldurchgang gesteuert und daher nachfolgend als "Slavekanal" bezeichnet.

Die Welligkeit des Ausgangsstroms i₁ bzw. i₂ wird minimal, wenn die Phasenverschiebung zwischen auf einanderfolgend getakteten Kanälen, also zwischen dem Masterkanal I und dem Slavekanal II oder gegebenenfalls auch zwischen verschiedenen Slavekanälen, 360°/n (n = Anzahl der Stromkanäle) beträgt. Der Mikrocontroller bestimmt aus den erfassten Stromnulldurchgängen die Periodendauer des Masterkanals I, um aus dieser Information den Zündzeitpunkt für den Slavekanal II und gegebenenfalls auch für die weiteren Slavekanäle zu ermitteln.

Der Gleichstromsteller, der im Volllastbetrieb vorzugsweise im Transition-Mode betrieben werden kann und dabei einen günstigen Wirkungsgrad aufweist, geht im Teillastbereich in den diskontinuierlichen Betrieb über, in dem der Wirkungsgrad schlechter ist.

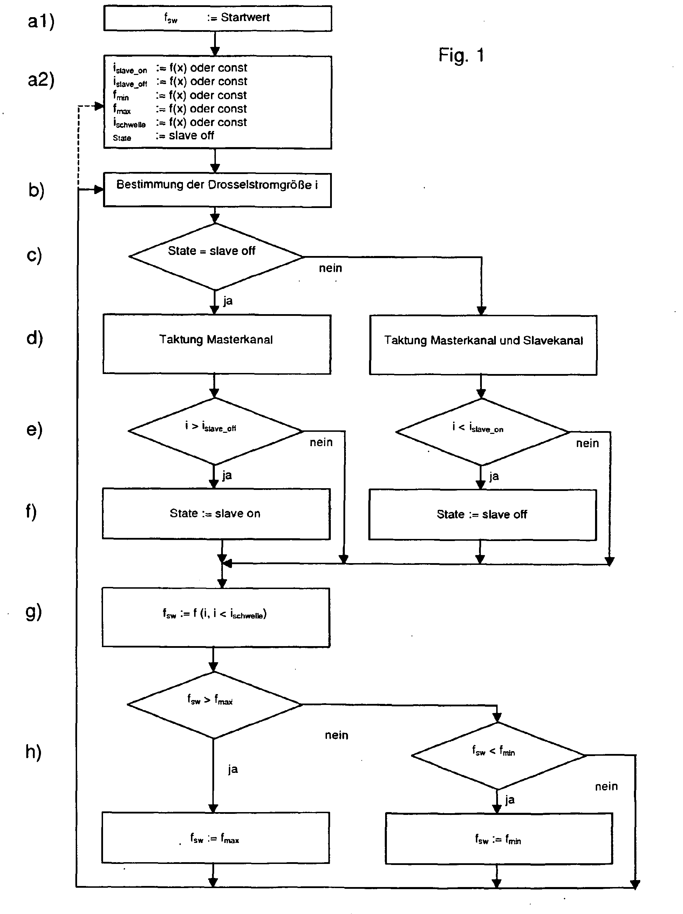

Um auch im Teillastbetrieb einen möglichst günstigen Wirkungsgrad zu erzielen, ist das nachfolgend anhand der Figur 1 beschriebene Steuerungsverfahren vorgesehen. Dieses Verfahren wird vorteilhafterweise durch den die Halbleiterschalter (T1 bis T4) steuernden Mikrocontroller ausgeführt und kann, mit entsprechenden Anpassungen, sowohl bei Gleichstromsteller mit nur einem Stromkanal wie auch bei Gleichstromstellern mit mehreren parallelen Stromkanälen angewendet werden.

Der Ablaufplan gemäß der Figur 1 verdeutlicht das Verfahren zur Steuerung eines Gleichstromstellers gemäß der Figur 3. Die Verfahrensschritte c bis f sind speziell zur Steuerung eines Gleichstromstellers mit mehreren parallelen Stromkanälen vorgesehen, der, entsprechend dem in der Figur 3 dargestellten Gleichstromsteller, einen Masterkanal I und mindestens einen Slavekanal II aufweist. Die Schritte c bis f führen im diskontinuierlichen Betrieb zu einer Minimierung von Schaltverlusten durch eine bedarfsweise Deaktivierung von Stromkanälen. Zur Anwendung auf einen Gleichstromsteller mit nur einem Stromkanal, entsprechend dem in Figur 2 dargestellten Schaltungsprinzip, entfallen die Verfahrensschritte c bis f.

Die Verfahrensschritte g und h führen im diskontinuierlichen Betrieb zu einer Verringerung von Schaltverlusten durch die Minimierung der Schaltfrequenz auf einen vom jeweiligen Arbeitspunkt abhängigen optimalen Wert. Für diese Verfahrenschritte ist eine Mehrkanaligkeit des Gleichstromstellers nicht erforderlich.

Das Verfahren beginnt in den Verfahrensschritten a1 und a2 mit einer Initalisierung der Variablen
- i_{slave_on}: Stromschwelle für das Ausschalten des Slave-Kanals,
- i_{slave_off}: Stromschwelle für das Einschalten des Slave-Kanals,
- i_{schwelle}: Stromschwelle für die Festlegung der Schaltfrequenz,
- fₘᵢₙ: untere Schaltfrequenz,
- fₘₐₓ: obere Schaltfrequenz,
- f_{sw}: aktuelle Schaltfrequenz,
mit teilweise festen Eingangswerten, die in der Figur 1 insbesondere durch die Bezeichnung const symbolisiert sind. Darüber hinaus kann eine Logikvariable State initialisiert werden, welche die Information enthält, ob ein Slavekanal aktiviert oder deaktiviert ist.

Die Variable f_{sw}, welche den Wert der jeweils aktuellen Schaltfrequenz enthält, wird anfangs mit einem Startwert initialisiert. Grundsätzlich sind die Frequenzgrenzen fₘᵢₙ und fₘₐₓ sowie die Stromschwellen i_{schwelle}, i_{slave_on} und i_{slave_off} als konstante Größen vorgesehen, so dass ein Rücksprung in den Verfahrensschritt b geschehen kann. Bei bestimmen Betriebspunkten (z. B. bei hohen Eingansspannungen) kann es vorteilhaft sein, den konkreten Wert von weiteren Parametern abhängig zu machen, was durch die Angabe f(x) angedeutet ist. Ist dies der Fall, muss der Rücksprung auf den Verfahrensschritt a2 erfolgen. Dies ist im Ablaufplan durch gestrichelte Linien gekennzeichnet.

Der Verfahrensschritt b dient zur Bestimmung der Drosselstromgröße i. Dies kann der arithmetische Mittelwert I_{d} oder der Peakwert des Drosselstroms î_{L} sein. Die Drosselstromgröße i kann messtechnisch oder durch Berechnung aus der Schaltfrequenz f_{sw} und Eingangsspannung (u₁ bzw. u₂) bestimmt werden.

Bei Gleichstromstellern mit mehreren Stromkanälen I, II erfolgt im Verfahrensschritt c eine Überprüfung der Logikvariable State, welche die Information enthält, ob allein der Masterkanal I in Betrieb ist (State = slave off) oder ob neben dem Masterkanal I auch der Slavekanal II aktiviert ist (State = slave on). Dem Wert der Variablen State entsprechend, taktet im Verfahrensschritt d der Mikrocontroller die Halbleiterschalter der derzeit aktiven Stromkanäle (I bzw. I und II).

Im Verfahrensschritt e erfolgt eine Überprüfung, ob der Wert der Drosselstromgröße i bei inaktivem Slavekanal eine Stromsschwelle i_{slave_off} überschreitet bzw. bei aktivem Slavekanal eine Stromschwelle i_{slave_on} unterschreitet, wobei im Verfahrensschritt f im jeweils positiven Fall der Wert der Variable State geändert wird und im jeweils negativen Fall die Variable State unverändert bleibt.

Das Ein- und Ausschalten des Slavekanals erfolgt also in Abhängigkeit von den Stromschwellen i_{slave_off} und i_{slave_on}. Da diese Stromschwellen unterschiedliche Werte aufweisen können, erfolgt das Ein- und Ausschalten des Slavekanals mit einer durch die Stromschwellen i_{slave_off} und i_{slave_on} vorgebbaren Hysterese.

Die Verfahrensschritte c bis f können durch die Einführung weiterer Variablen, Stromschwellen und Verzweigungen leicht erweitert werden, so dass auch mehrere Slavekanäle stromschwellenabhängig nacheinander aus- oder einschaltbar sind.

Im Verfahrensschritt g wird die erforderliche Schaltfrequenz f_{sw} zur Taktung des oder der Halbleiterschalter in Abhängigkeit von der erfaßten oder berechneten Drosselstromgröße i und der vorgegebenen Stromschwelle i_{schwelle} bestimmt.

Eine Begrenzung der berechneten Schaltfrequenz f_{sw} auf einen Wert zwischen einem oberen Grenzwert fₘₐₓ einerseits und einem unteren Grenzwert fₘᵢₙ andererseits, erfolgt im Verfahrensschritt h.

Die untere Schaltfrequenz fₘᵢₙ kann grundsätzlich beliebig vorgegeben werden. Je nach Anwendungsfall kann z. B. eine untere Schaltfrequenz von 16 kHz sinnvoll sein, um so ein Takten im hörbaren Bereich zu verhindern. Der obere Grenzwert der Schaltfrequenz fₘₐₓ ist so gewählt, dass der Gleichstromsteller bei minimaler Eingang- und maximaler Ausgangsspannung mit ausreichend großer Schaltfrequenz f_{sw} den maximalen Ausgangsstrom übertragen kann.

Hat die Schaltfrequenz f_{sw} den Wert der oberen Schaltfrequenz fₘₐₓ erreicht, so wird die Schaltfrequenz f_{sw} auf dem Wert der oberen Schaltfrequenz fₘₐₓ gehalten, und die Strombegrenzung durch den Schwellenwert i_{schwelle} für die Drosselstromgröße i aufgehoben. Diese Drosselstromgröße i darf daher bei konstanter Schaltfrequenz fₘₐₓ den Schwellenwert i_{schwelle} überschreiten und zwar so weit, bis der Transition-Mode erreicht wird.

Im Transition-Mode kommt es nach dem Erreichen der oberen Schaltfrequenz fₘₐₓ bei entsprechend hohen Leistungen und entsprechend großen Einschaltzeiten des Halbleiterschalters zu einer Verringerung der Schaltfrequenz f_{sw}, da im Transition-Mode erst wieder bei einem zu Null gewordenen Drosselstrom i_{L} eingeschaltet wird und bei konstanten Spannungsverhältnissen und Induktivitätswert der Speicherdrossel, die Schaltfrequenz f_{sw} sich bei höheren Peakströmen zwangsläufig verringern muss.

Wird das zuvor beschriebene Verfahren in einem kontinuierlich arbeitendem Steller eingesetzt, bedeutet fₘₐₓ die eigentliche Arbeitsschaltfrequenz des Gleichstromstellers. Bei sich vergrößerndem Drosselpeakstrom î_{L} geht der Gleichstromsteller somit in den kontinuierlichen Betrieb über.

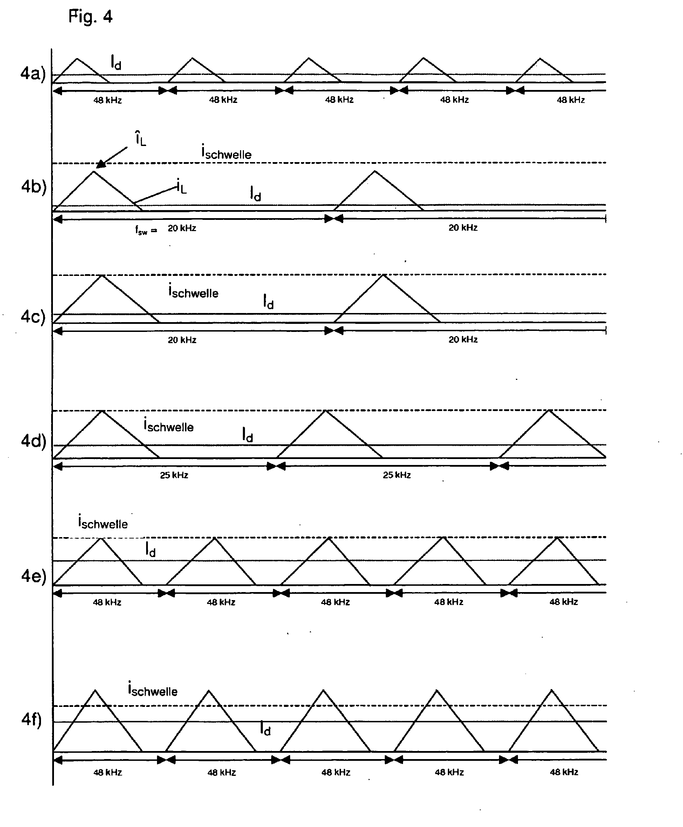

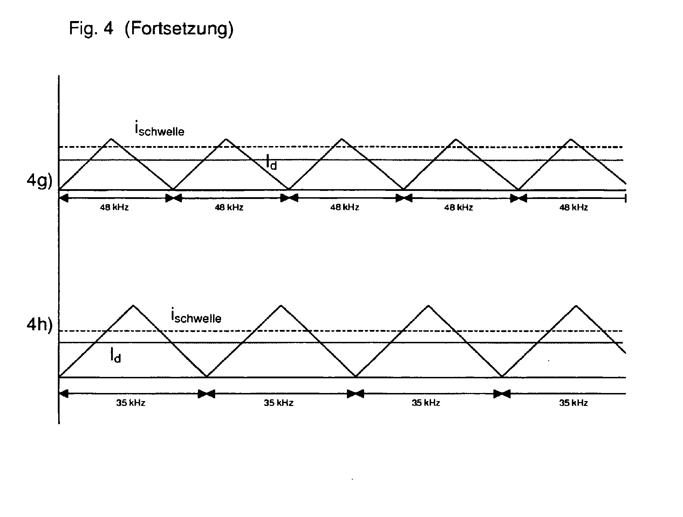

Die dynamische Begrenzung der Drosselstromgröße i, in der Figur 1 in den Verfahrensschritten g und h dargestellt, verdeutlicht die Figur 4 anhand mehrerer Stromverlaufsdiagramme. Aufgetragen ist jeweils der Verlauf des Drosselstroms î_{L} gegen eine Zeitachse. Die Drosselstromgröße i ist hier speziell der Peakwert des Drosselstroms î_{L}. Zur Vereinfachung ist nur der Masterkanal dargestellt.

Figur 4a zeigt den Verlauf des Drosselstroms i_{L} im Masterkanal noch ohne eine Anwendung des erfindungsgemäßen Verfahrens. Der Masterkanal wird mit der oberen Schaltfrequenz fₘₐₓ angesteuert. Die Einschaltzeit wird durch den Mikrocontroller so vorgegeben, dass der gewünschte arithmetische Mittelwert des Eingangsstroms fließt.

Das Verfahren greift nun folgendermaßen ein. Solange die Drosselstromgröße i kleiner ist als ein Schwellwert i_{schwelle}, wird die Schaltfrequenz f_{sw} auf eine untere Schaltfrequenz fₘᵢₙ zurückgefahren. Diese untere Schaltfrequenz fₘᵢₙ beträgt in der Figur 4b beispielhaft 20 kHz. Soll ein größerer mittlerer Ausgangsstrom fließen, so wird die Speicherdrossel zunächst bis zum Schwellwert i_{schwelle} ausgesteuert, was in der Figur 4c dargestellt ist. Um die Drosselstromgröße i zu vergrößern, erhöht sich durch die in der Figur 1 dargestellten Verfahrensschritte g und h die Schaltfrequenz (Figur 4d). Bei einem weiteren Ansteigen der Drosselstromgröße i wird die Schaltfrequenz f_{sw} bis zur vorgegebenen oberen Schaltfrequenz fₘₐₓ gesteigert, die, wie die Figur 4e zeigt, in diesem Beispiel 48 kHz beträgt.

Steigt die Drosselstromgröße i nach dem Erreichen der oberen Schaltfrequenz fₘₐₓ noch weiter an, so wird die Schwelle i_{schwelle} für den Peakwert des Drosselstroms î_{L} aufgehoben (Figur 4f)

Bei einer weiteren Erhöhung des Stroms I_{d} vergrößert sich daher die Einschaltzeit des getakteten Halbleiterschalters weiter und somit auch die Drosselstromgröße i, bis schließlich der Transition-Mode erreicht wird (Figur 4g).

Soll der Mittelwert I_{d} sich weiter erhöhen, muss sich ebenfalls die Drosselstromgröße i erhöhen wobei der Transition-Mode beibehalten wird. Die Schaltfrequenz f_{sw} senkt sich aufgrund der höheren Drosselstromgröße i ab, in der Figur 4h beispielhaft auf 35 kHz. Die Schaltfrequenz f_{sw} stellt sich so ein, dass die Stromzeitfläche des Drosselstroms î_{L} der Stromzeitfläche des arithmetischen Mittelwert des Stroms I_{d} entspricht.

### Bezugszeichen

- D1, D2: (Freilauf)dioden
- I: erster Stromkanal (Masterkanal)
- II: zweiter Stromkanal (Slavekanal)
- L1, L2: Speicherdrossel
- T1 -T4: Halbleiterschalter
- U1, U2: Spannung(squell)en
- W: Wicklung

- a bis h: Verfahrensschritte

- u₁, u₂: Spannungen (der Spannungsquellen U1 und U2)

- i: Drosselstromgröße
- i_{L}: Augenblickswert des Drosselstroms
- î_{L}: Peakwert des Drosselstroms
- i₁, i₂: Induktionsströme (Ausgangsströme)
- I_{d}: arithmetischer Mittelwert des Drosselstroms

- i_{schwelle}: Stromschwelle für die Festlegung der Schaltfrequenz,
- i_{slave_on}: Stromschwelle für das Zuschalten des Slave-Kanals,
- i_{slave_off}: Stromschwelle für das Ausschalten des Slave-Kanals,

- fₘᵢₙ: untere Schaltfrequenz
- fₘₐₓ: obere Schaltfrequenz
- f_{sw}: aktuelle Schaltfrequenz

- State: Logikvariable

## Patentansprüche

1. Verfahren zur Steuerung eines Gleichstromstellärs, der zumindest einen durch einen Mikrocontroller steuerbaren Halbleiterschalter und eine Speicherdrossel aufweist, mit
- einer Initialisierung vorgegebener Größen (f_{sw}, i_{slave_on}, i_{slave_off}, i_{schwelle}, fₘᵢₙ, fₘₐₓ) mit einem festen oder von einem Parameter abhängigen Wert [Verfahrensschritte a1, a2], und der zyklischen Abfolge zumindest folgender Verfahrensschritte:
- Bestimmung einer Drosselstromgröße (i), die von dem arithmetischen Mittelwert (I_{d}) oder dem Peakwert des Drosselstroms (î_{L}) der Speicherdrossel (L1) abgeleitet ist, [Verfahrensschritt b],
- Berechnung einer Schaltfrequenz (f_{sw}) zur Taktung des steuerbaren Halbleiterschalters, wobei die Schaltfrequenz (f_{sw}) erstens eine Funktion der Drosselstromgröße (i) ist und zweitens von der Bedingung abhängig ist, ob die Drosselstromgröße (i), eine vorgegebene Stromschwelle (i_{schwelle}) überschreitet [Verfahrensschritt g],
- Begrenzung der berechneten Schaltfrequenz (f_{sw}) auf einen Wert zwischen einer unteren Schaltfrequenz (fₘᵢₙ) und einer oberen Schaltfrequenz (fₘₐₓ) [Verfahrensschritt h],
**dadurch gekennzeichnet,**
**dass** wenn im diskontinuierlichen Betrieb die Drosselstromgröße (i), die Stromschwelle (i_{schwelle}) überschreitet, die Schaltfrequenz (f_{sw}) auf dem Wert der oberen Schaltfrequenz (fₘₐₓ) gehalten wird.

2. Verfahren nach Anspruch 1, **dadurch gekennzeichnet, dass** die Drosselstromgröße (i) der zeitlich gemittelte Wert des Drosselstroms (i_{L}) ist.

3. Verfahren nach Anspruch 1, **dadurch gekennzeichnet, dass** die Drosselstromgröße (i) der Peakwert (î_{L}) des Drosselstroms (î_{L}) ist.

4. Verfahren nach Anspruch 1, **dadurch gekennzeichnet, dass** die Stromschwelle (i_{schwelle}) zur Verstellung der Schaltfrequenz (f_{sw}) von wenigstens einer elektrischen Größe abhängig ist.

5. Verfahren nach Anspruch 4, **dadurch gekennzeichnet, dass** die elektrische Größe die Eingangsspannung oder die Ausgangsspannung oder die Eingangsleistung oder die Ausgangsleistung des Gleichstromstellers ist.

6. Verfahren nach Anspruch 1 **dadurch gekennzeichnet, dass** der Gleichstromsteller mehrere parallelgeschaltete Stromkanäle (I, II) aufweist und dass die Drosselstromgröße (i) mit Stromschwellen (i_{slave_on}, i_{slave_off}) verglichen wird und dass aufgrund des Ergebnisses dieses Vergleiches Stromkanäle (I, II) deaktiviert bzw. aktiviert werden [Verfahrensschritte c bis f].

## Claims

1. Process for controlling a direct current chopper controller having at least one semiconductor switch that is controllable by a microcontroller and a storage choke, with
- an initialisation of specified variables (f_{sw}, i_{slave_on}, i_{slave_off}, i_{schwelle}, fₘᵢₙ, fₘₐₓ) at a value which is fixed or which is dependent on one parameter [process step a1, a2],
and the cyclic sequence of at least the following process steps:
- determination of a choke current variable (i) derived from the arithmetic mean value (I_{d}) or from the peak value of the choke current (î_{L}) of the storage choke (L1), [process step b],
- computation of a switching frequency (f_{sw}) for synchronising the controllable semiconductor switch, for which purpose the switching frequency (f_{sw}) is, firstly, a function of the choke current variable (i) as well as, secondly, being dependent on the condition as to whether the choke current variable (i) exceeds a pre-specified current threshold (i_{schwelle}) [process step g],
- limitation of the computed switching frequency (f_{sw}) to a value between a lower switching frequency (fₘᵢₙ) and an upper switching frequency (fₘₐₓ) [process step h],
**characterised in that**
whenever the choke current variable (i) exceeds the current threshold (i_{schwelle}) in discontinuous operations, the switching frequency (f_{sw}) is maintained at the value of the upper switching frequency (fₘₐₓ).

2. Process according to Claim 1, **characterised in that** the choke current variable (i) is the time-averaged value of the choke current (i_{L}).

3. Process according to Claim 1, **characterised in that** the choke current variable (i) is the peak value (î_{L}) of the choke current (i_{L}).

4. Process according to Claim 1, **characterised in that** the current threshold (i_{schwelle}) for adjusting the switching frequency (f_{sw}) is dependent on at least one electrical variable.

5. Process according to Claim 4, **characterised in that** the electrical variable is the input voltage or the output voltage or the power input or the power output of the direct current chopper controller.

6. Process according to Claim 1, **characterised in that** the direct current chopper controller has multiple current channels (I, II) connected in parallel and that the choke current variable (i) is compared to the current thresholds (i_{slave_on}, i_{slave_off}) and that, based on the result of this comparison, current channels (I, II) are deactivated or activated [process steps c to f].

## Revendications

1. Procédé pour la commande d'un convertisseur de courant continu, qui présente au moins un commutateur à semi-conducteur, qui peut être commandé par un microcontrôleur, et une bobine d'accumulation, avec
- une initialisation de grandeurs prédéterminées (f_{sw}, i_{slave_on}, i_{slave_off}, i_{schwelle}, fₘᵢₙ, fₘₐₓ) avec une valeur fixe ou dépendante d'un paramètre [étapes a1, a2 du procédé],
et la succession cyclique d'au moins les étapes de procédé suivantes:
- Détermination d'une grandeur de courant de bobine (i), qui est dérivée de la valeur moyenne arithmétique (I_{d}) ou de la valeur de crête du courant de bobine (î_{L} de la bobine d'accumulation (L₁) [étape b du procédé],
- calcul d'une fréquence de commutation (f_{sw}) pour la cadence du commutateur à semi-conducteur contrôlable, la fréquence de commutation (f_{sw}) étant, premièrement, fonction de la grandeur du courant de bobine (i) et dépendant, deuxièmement, si la grandeur de courant de bobine (i) dépasse un seuil de courant prédéterminé (i_{schwelle}) [étape g du procédé],
- limitation de la fréquence de commutation (f_{sw}) calculée à une valeur située entre une fréquence de commutation inférieure (fₘᵢₙ) et une fréquence de commutation supérieure (fₘₐₓ) [étape h du procédé],
**caractérisé en ce que**,
quand la grandeur du courant de bobine (i) dépasse, en service discontinu, le seuil de courant prédéterminé (i_{schwelle}), la fréquence de commutation (f_{sw}) est maintenue à la valeur de la fréquence de commutation supérieure (fₘₐₓ).

2. Procédé selon la revendication 1, **caractérisé en ce que** la grandeur de courant de bobine (i) est la valeur de crête moyenne, temporelle du courant de bobine (i_{L}).

3. Procédé selon la revendication 1, **caractérisé en ce que** la grandeur de courant de bobine (i) est la valeur de crête (î_{L}) du courant de bobine (i_{L}).

4. Procédé selon la revendication 1, **caractérisé en ce que** le seuil de courant (i_{schwelle}), pour le réglage de la fréquence de commutation (f_{sw}) dépend d'au moins une grandeur électrique.

5. Procédé selon la revendication 4, **caractérisé en ce que** la grandeur électrique est la tension d'entrée ou la tension de sortie ou la puissance d'entrée ou la puissance de sortie du convertisseur de courant continu.

6. Procédé selon la revendication 1, **caractérisé en ce que** le convertisseur de courant continu présente plusieurs canaux de courant (I, II) et que la grandeur de courant de bobine (i) est comparée avec des seuils de courant (i_{slave_on}, i_{slave_off}) et que, selon le résultat de cette comparaison, des canaux de courant (I, II) sont respectivement désactivés ou activés [étapes c à f du procédé].
